# FASCICULE DE BREVET EUROPEEN

(11) **EP 2 937 516 B1**
(45) Date de publication et mention de la délivrance du brevet: **01.04.2020**
(21) Numéro de dépôt: 14165796.5
(22) Date de dépôt: 24.04.2014
(51) Int. Cl.: F01D 9/04

(54) **Carter cintré monobloc de compresseur de turbomachine axiale et procédé de fabrication associé**
Rundgebogenes Monoblock-Gehäuse für Kompressor einer axialen Turbomaschine und entsprechendes Fertigungsverfahren
One-piece centred housing of an axial turbomachine compressor and associated manufacturing process

(43) Date de publication de la demande: 28.10.2015
(73) Titulaire: Safran Aero Boosters SA, 4041 Herstal (BE)
(72) Inventeur: Wlasowski, Michel, 4800 Verviers (BE)
(74) Mandataire: Lecomte & Partners

(56) Documents cités:
- EP-A1- 1 310 633
- EP-A2- 1 227 218
- US-A- 2 945 290
- US-B1- 6 321 448
- US-B2- 6 415 510

## Description

### Domaine technique

L'invention a trait à un procédé de fabrication d'un carter de turbomachine axiale. Plus précisément, l'invention a trait à un carter monobloc comprenant des aubes. L'invention a également trait à une turbomachine axiale comprenant un carter réalisé selon l'invention.

### Technique antérieure

Une turbomachine axiale comprend généralement plusieurs carters structurels permettant de supporter différents modules. Les carters permettent par ailleurs de guider et de délimiter les flux annulaires traversant la turbomachine. Afin de dévier les flux annulaires, la turbomachine comprend plusieurs rangées annulaires d'aubes reliées aux carters.

Des aubes statoriques disposées en rangée annulaire peuvent être directement soudées sur une paroi de la turbomachine. Ce mode de fixation permet de constituer un ensemble monobloc robuste. Cette architecture permet en outre de diminuer le nombre d'interfaces entre les éléments mécaniques.

Le document US 6,321,448 B1 divulgue un procédé de réalisation d'un carter externe de turbomachine. Le procédé comprend la succession de plusieurs étapes, dont la découpe d'une tôle de sorte à lui donner des dimensions correspondant aux côtes extérieures du carter, cintrage de la tôle découpée pour former un tube, découpe laser de la tôle pour créer des ouvertures selon les profils des aubes, puis insertion et soudage des aubes dans leurs ouvertures en vue de leur fixation définitive. Ce procédé permet de réduire le temps pour positionner et ajuster les aubes dans le tube formant le carter. Cependant, ce procédé demande d'effectuer des découpes précises dont la présence fragilise le carter. L'opération de soudage des aubes est également laborieuse car elle ne peut se faire que de l'extérieur. Le recours à une soudure laser allonge le temps de fabrication, et augmente le temps d'assemblage. La combinaison du procédé de découpe, de soudure, et de cintrage détériore particulièrement la résistance en fatigue de la matière de la tôle à la jonction avec chaque aube. Le document US2945290 montre le cintrage d'une tôle sur laquelle sont montées des aubes statoriques.

### Résumé de l'invention

### Problème technique

L'invention a pour objectif de résoudre au moins un des problèmes posés par l'art antérieur. Plus précisément, l'invention a également pour objectif de réduire le temps de fabrication d'un carter monobloc de turbomachine avec une rangée annulaire d'aubes soudées. L'invention a également pour objectif de préserver et/ou d'augmenter la résistance mécanique d'un carter monobloc comprenant une rangée annulaire d'aubes soudées.

### Solution technique

L'invention a pour objet un procédé de fabrication d'un carter de turbomachine axiale, notamment de compresseur, le carter comprenant une tôle et au moins une rangée annulaire d'aubes statoriques, le procédé comprenant les étapes suivantes : (a) fourniture ou fabrication d'une tôle métallique plane ; (b) soudage d'aubes statoriques sur l'une des faces planes de la tôle, les aubes étant agencées de sorte à former au moins une rangée d'aubes ; remarquable en ce qu'il comprend ensuite une étape de (c) cintrage de la tôle autour d'un axe de cintrage perpendiculaire à la rangée d'aubes, de sorte à former un carter avec au moins une portion angulaire de tube grâce à la tôle, et avec au moins une portion angulaire de rangée annulaire d'aubes.

Selon un mode avantageux de l'invention, lors de l'étape (b) soudage des aubes, les aubes sont soudées par friction, éventuellement selon un mouvement dans le plan de la tôle plane.

Selon un mode avantageux de l'invention, à l'issue de l'étape (c) cintrage de la tôle, la tôle forme un tube avec au moins une rangée annulaire d'aubes, ou la tôle forme une fraction angulaire de tube tel un demi-tube avec au moins une demi-rangée annulaire d'aubes, éventuellement la tôle cintrée présente une surface concave et une surface convexe, chaque rangée d'aubes étant située sur la surface concave.

Selon un mode avantageux de l'invention, lors de l'étape (b) soudage des aubes, au moins une ou chaque aube est soudée sur tout son profil aérodynamique à sa jonction avec la tôle.

Selon un mode avantageux de l'invention, lors de l'étape (b) soudage des aubes, les aubes de chaque rangée présentent des cordes parallèles, les cordes des aubes étant inclinées d'un angle inférieur à 30° préférentiellement inférieur à 20°, par rapport à l'axe de cintrage de la tôle de l'étape (c) cintrage de la tôle.

Selon un mode avantageux de l'invention, l'étape (a) fourniture ou fabrication d'une tôle comprend une étape d'usinage d'une plaque brute de sorte à former une tôle avec des variations d'épaisseurs.

Selon un mode avantageux de l'invention, l'étape d'usinage comprend la réalisation de moignons d'aubes sur lesquels sont soudées les aubes, l'épaisseur générale de la tôle étant inférieure ou égale à la hauteur des moignons, l'épaisseur de chaque moignon étant supérieure à l'épaisseur de l'aube correspondante.

Selon un mode avantageux de l'invention, le carter est formé de deux demi-carters séparés axialement suivant un plan de séparation axial.

Selon un mode avantageux de l'invention, le procédé comprend en outre une étape de (d) soudage de brides annulaires s'étendant radialement et/ou de brides axiales s'étendant radialement, éventuellement les brides axiales sont réalisées par pliage.

Selon un mode avantageux de l'invention, lors de l'étape (c) cintrage, le cintrage peut comprendre au moins une, préférentiellement plusieurs étapes de roulage et/ou de galetage.

Selon un mode avantageux de l'invention, le cintrage est effectué avec des rouleaux prenant appui sur la tôle du côté des aubes de part et d'autre de chaque rangée annulaire d'aubes, préférentiellement la tôle comprend plusieurs rangées d'aubes et les rouleaux du côté des aubes prennent appui entre chaque rangée d'aubes.

Selon un mode avantageux de l'invention, le cintrage est effectué à l'aide de rouleaux disposés de part et d'autre de la tôle, les rouleaux situés d'un côté de la tôle étant à distance axialement par rapport aux rouleaux situés de l'autre côté de la tôle, éventuellement les rouleaux situés d'un côté de la tôle chevauchent radialement les rouleaux situés de l'autre côté de la tôle de sorte à former des gorges annulaires intérieures entre les rangées annulaires d'aubes.

Selon un mode avantageux de l'invention, au moins une gorge annulaire présente une profondeur supérieure à l'épaisseur générale E1 de la tôle.

Selon un mode avantageux de l'invention, le procédé comprend en outre une étape (e) application d'au moins une couche annulaire de matériau abradable, éventuellement dans une gorge annulaire.

Selon un mode avantageux de l'invention, les aubes présentent chacune une direction d'empilement principal, à l'issue de l'opération de soudage des aubes les directions d'empilement principal sont parallèles, et à l'issue de l'étape de cintrage les directions d'empilement principal sont régulièrement inclinées les unes par rapport aux autres, elles sont éventuellement concentriques.

Selon un mode avantageux de l'invention, chaque rangée d'aube ou toutes les rangées d'aubes est/sont parallèle(s) à un même bord de la tôle plane.

Selon un mode avantageux de l'invention, les moignons forment des blocs de matière.

Selon un mode avantageux de l'invention, lors de l'étape (b) soudage des aubes, chaque rangée est perpendiculaire à l'axe autour duquel est cintrée la tôle.

Selon un mode avantageux de l'invention, lors de l'étape (c) cintrage de la tôle, le cintrage consiste à envelopper les aubes à l'intérieur de la tôle.

Selon un mode avantageux de l'invention, les bords d'attaque et les bords de fuite des aubes sont généralement perpendiculaires au plan général de la tôle.

Selon un mode avantageux de l'invention, le carter est généralement tubulaire, et lors de l'étape (c) cintrage, la tôle est cintrée autour de l'axe du tube.

Selon un mode avantageux de l'invention, lors de l'étape (c) cintrage, la tôle est cintrée selon la hauteur des aubes, éventuellement la tôle est incurvée dans le sens de la hauteur des aubes et/ou dans la direction de l'empilement des profils des aubes.

L'invention a également pour objet une turbomachine,

Turbomachine axiale comprenant un carter avec au moins une rangée annulaire d'aubes statoriques, remarquable en ce que le carter est réalisé suivant le procédé de réalisation d'un carter selon l'invention.

### Avantages apportés

L'invention permet de réaliser simplement un carter robuste.

L'emploi de moignon permet d'écarter la zone affectée thermiquement de la tôle. Ainsi, la tôle n'est pas fragilisée lors de l'opération de cintrage.

L'invention permet également de réduire l'épaisseur de la tôle et donc d'alléger le carter tout en réduisant les déformations dans l'épaisseur de la tôle. Les aubes présentent des jonctions généralement axiales avec la tôle, elles permettent donc de former des rangées de raidisseurs. Ces rangées complètent l'effet de rigidification des brides qui encadrent la tôle.

Lors de l'étape de soudage, la tôle et les aubes chauffent puis se refroidissent en laissant apparaître des contraintes. Lorsqu'il s'agit de contraintes de traction, la formation des gorges peut permettre de créer une contrainte de compression dans la matière, ce qui améliore l'endurance. Cet effet peut être atteint grâce à la déformation géométrique de la tôle et/ou grâce au galetage. La création de fissures peut également être combattue.

### Brève description des dessins

La figure 1 esquisse une turbomachine axiale selon l'invention.
La figure 2 représente un compresseur de turbomachine selon l'invention.
La figure 3 est un diagramme du procédé de réalisation d'un carter de turbomachine axiale selon l'invention.
La figure 4 représente une plaque brute permettant de réaliser une tôle selon l'invention
La figure 5 illustre l'étape d'usinage d'une plaque brute de sorte à former une tôle avec des moignons d'aubes selon l'invention.
La figure 6 illustre l'étape de soudure des aubes sur la tôle selon l'invention.
La figure 7 représente une tôle avec des rangées d'aubes selon l'invention.
La figure 8 illustre l'étape de cintrage de la tôle selon l'invention.
La figure 9 ébauche un détail de l'étape de cintrage de la tôle selon l'invention.
La figure 10 illustre l'étape de soudure de brides sur la tôle selon l'invention.

### Description des modes de réalisation

Dans la description qui va suivre, les termes intérieur ou interne et extérieur ou externe renvoient à un positionnement par rapport à l'axe de rotation d'une turbomachine axiale.

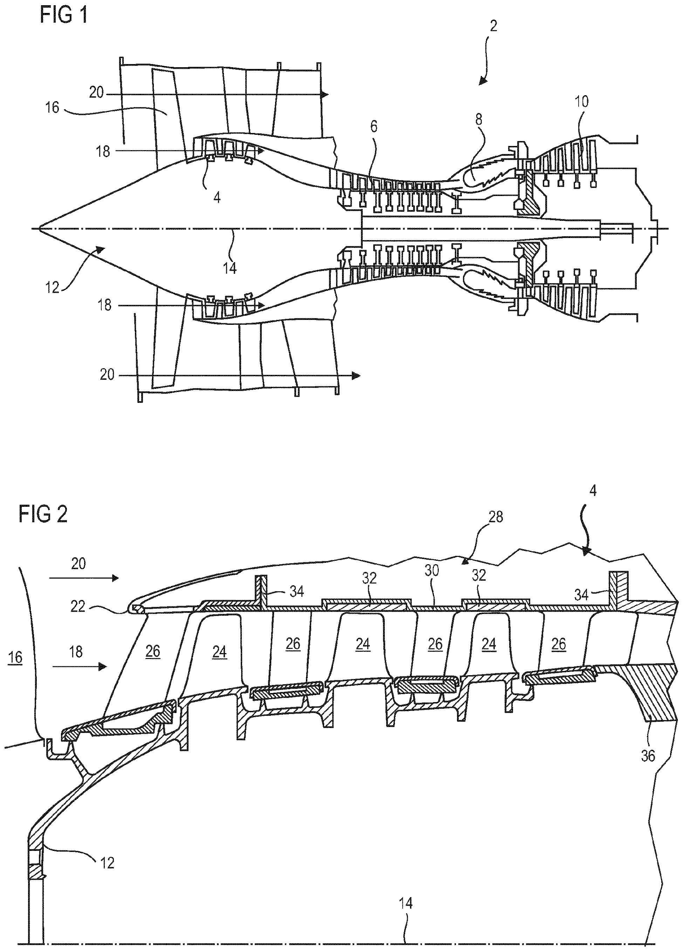

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale 2 telle que celle de la figure 1. Le compresseur peut être un compresseur basse-pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés à des rangées d'aubes rotoriques 24 pour redresser le flux d'air, de sorte à convertir la vitesse du flux en pression.

Le compresseur peut comprendre un carter 28, par exemple un carter externe. Le carter peut former une paroi 30 généralement tubulaire étanche, il peut délimiter le flux primaire 18 de la turbomachine. Le carter 28 peut servir de support aux aubes statoriques 26, et éventuellement à des couches annulaires de matériau abradable 32. Les aubes statoriques 26 s'étendent essentiellement radialement depuis le carter. Elles sont régulièrement espacées les unes des autres, et présentent une même orientation angulaire dans le flux. Avantageusement, les aubes d'une même rangée sont identiques. Le carter peut également comprendre des brides annulaires de fixation 34 qui s'étendent radialement. Ces brides 34 peuvent permettre le montage du de bec séparation 22, ou une fixation du carter sur le carter intermédiaire de la turbomachine 36.

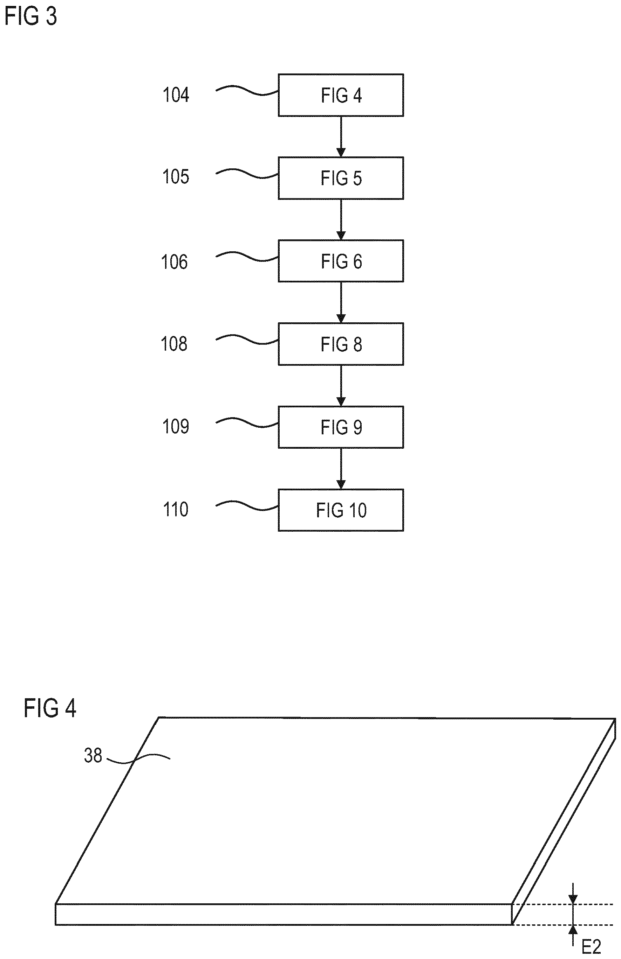

La figure 3 représente un diagramme du procédé de fabrication du carter de turbomachine selon l'invention. Le procédé permet de réaliser un carter de compresseur, basse-pression ou haute pression, un carter de turbine, ou un carter de soufflante.

Le procédé peut comprendre la succession, éventuellement dans cet ordre, des étapes suivantes:
(a) fourniture et/ou fabrication 104 d'une tôle ;
(b) soudage 106 d'aubes sur la tôle ;
(c) cintrage 108 de la tôle, par exemple de sorte à former un demi-tube ;
(d) soudage de brides axiales et annulaires sur la tôle cintrée ;
(e) mise en oeuvre d'une couche d'abrabable dans la tôle cintrée ;
(f) répétition des étapes (a) à (e) et fixation de brides axiales de sorte à former un carter annulaire complet lorsque le carter est réalisé par portions de carters, tel des demi-carters.

La partie fabrication de l'étape (a) fourniture ou fabrication 104 est optionnelle. Les aubes peuvent être directement soudées sur l'une des faces d'une tôle fournie. Suivant une variante de l'invention, la fourniture d'une tôle peut être la fourniture d'une tôle présentant des moignons d'aubes réalisés lors d'une étape d'usinage 105.

L'étape (d) soudage de brides 110 est optionnelle. L'étape (f) est optionnelle. Le carter peut être réalisé sans brides. Il peut être fixé par tout autre moyen adéquat à la turbomachine. Ou encore, la tôle peut être pliée, par exemple pour former des brides axiales. Elle peut également être mise en forme pour former des brides annulaires. La tôle cintrée peut être fermée par soudage.

La figure 4 illustre l'étape de fourniture ou fabrication 104 d'une tôle permettant de réaliser le carter.

L'étape de fourniture d'une tôle peut comprendre la fourniture d'une tôle plane, éventuellement rectangulaire. Elle peut présenter deux faces principales opposées ; et quatre côtés, ou tranches, opposés deux à deux. La tôle peut être issue de laminage. La tôle peut être en acier, en titane, en aluminium. Son épaisseur peut être inférieure à 5 mm, préférentiellement inférieure à 2 mm, éventuellement inférieure à 1 mm. Son épaisseur et son matériau sont configurés de sorte à réaliser un tube de diamètre inférieur à 1 m, préférentiellement inférieur à 70 cm en se déformant élastiquement.

L'étape fourniture ou fabrication peut comprendre, optionnellement, la fabrication de la tôle. Celle-ci peut être réalisée à partir d'une plaque brute 38 de métal soumise à des procédés de fabrication, tel des enlèvements de matière. La plaque brute 38 peut généralement être rectangulaire, et présenter deux faces opposées principales. Ces faces sont généralement planes et parallèles. Elles peuvent définir l'épaisseur E2 de la plaque brute 38, qui est supérieure à l'épaisseur générale de la tôle plane.

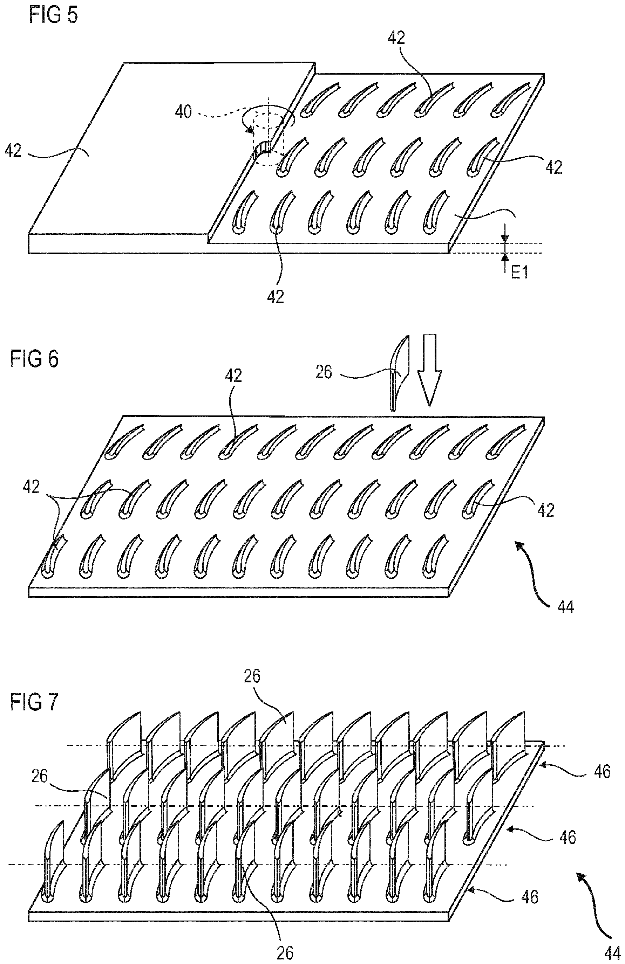

La figure 5 illustre l'option fabrication de l'étape fourniture ou fabrication d'une tôle à partir d'une plaque brute de métal.

L'étape de fabrication d'une tôle peut comprendre l'usinage de la plaque brute 38. Cet usinage peut comprendre une ou plusieurs opérations de fraisage. Une ou plusieurs fraises 40 parcourent l'étendue de la plaque pour enlever localement de la matière, selon plusieurs épaisseurs. L'étape d'usinage peut permettre de réaliser au moins une, préférentiellement plusieurs formes de moignons d'aubes 42 dans l'épaisseur E2 de la plaque brute, et de réaliser des portions de moindre épaisseur entre les moignons 42. Les moignons 42 peuvent former des bosses sur l'une des faces de la tôle.

Cette étape conduit à former une tôle à moignons 42 dont l'épaisseur générale E1 correspond à l'épaisseur des portions de moindre épaisseur. L'épaisseur cumulée de l'épaisseur E1 de la tôle additionnée à la hauteur des moignons 42 peut être inférieure à l'épaisseur E2 de la plaque brute 38. Les moignons d'aubes 42 peuvent être agencés en au moins une rangée. Les moignons 42 d'une même rangée peuvent être identiques. Les profils des moignons 42 peuvent présenter des cordes du bord ou point d'attaque au bord ou point de fuite. Les différentes rangées de moignons peuvent présenter des cordes différentes, dont les inclinaisons par rapport aux rangées varient progressivement.

La figure 6 illustre l'étape de fixation des aubes statoriques 26 sur la tôle 44 fournie ou fabriquée, la fixation pouvant s'effectuer par soudage.

Le soudage peut comprendre le soudage d'aubes 26 rapportées, entières ou par portions, les portions étant par exemple de pales d'aubes. Des moignons usinés peuvent comprendre des portions de pale d'aube, pour éloigner les soudures de la tôle 44. Les aubes 26 soudées, ou les pales soudées peuvent comprendre chacune un bord d'attaque et un bord de fuite, qui forment chacun un bord saillant. Elles peuvent comprendre chacune une surface intrados et une surface extrados, éventuellement majoritairement parallèles. Elles peuvent comprendre chacune un empilement de profils aérodynamiques, profilés pour dévier l'écoulement par rapport à l'axe de la turbomachine. Le profil de l'aube en contact de la tôle peut être intégralement soudé à la tôle.

Les aubes 26 peuvent être directement soudées sur la tôle, par exemple sur une surface plane formant une des faces de la tôle. Elles peuvent également être soudées sur des moignons 42 si la tôle 44 en est munie. Les moignons 42 forment des blocs de matière, qui peuvent être plus large selon le sens des rangées, que les aubes 26 qui y sont soudées. Les hauteurs des moignons 42 peuvent être supérieures à la hauteur générale ou épaisseur générale de la tôle 44, la hauteur des moignons étant mesurée selon l'épaisseur de la tôle 44. Les moignons 42 peuvent être des pieds d'aubes, et peuvent présenter des rayons de raccordement à la tôle, pour permettre une répartition d'efforts. Les moignons 42 peuvent être plus épais que les aubes 26, l'épaisseur pouvant être l'épaisseur maximale. L'épaisseur étant mesurée transversalement à la corde de l'aube. L'aspect massif des moignons permet de renforcer la tôle 44, et également d'apporter une inertie thermique lors du soudage.

Les aubes 26 peuvent former, en fonction de leur profil, des ailettes de refroidissement qui permettent d'orienter le sens de solidification des soudures. Les bords d'attaque et les bords de fuite peuvent être essentiellement affutés et fins, ce qui y accélère le refroidissement et la solidification des soudures. Celles-ci peuvent permettre de solidifier des bords d'attaque et de fuite des aubes vers le centre, éventuellement en générant une contrainte dans la soudure, par exemple en raison d'une vitesse de refroidissement différente de celle de la tôle 44.

Avantageusement, les aubes 26 peuvent être soudées par friction. Ce procédé est bénéfique car il ne nécessite que quelques secondes, éventuellement de deux à cinq secondes de friction pour souder une aube. Ce procédé est particulièrement adapté à une tôle car elle présente naturellement des surfaces de réception et d'appui parallèles. Ces surfaces restent avantageusement planes à ce stade du procédé. L'existence optionnelle des moignons limite la déformation de la tôle pendant et après la friction, en formant des coussins.

La figure 7 ébauche la tôle 44 plane avec au moins une rangée droite d'aubes 26, dans le cas présent la tôle 44 supporte et relie trois rangées 46 d'aubes 26 alignées.

La tôle supporte au moins une rangée 46 d'aubes 26, préférentiellement plusieurs rangées 46 d'aubes. Chaque rangée 46 est droite, et éventuellement parallèle à un bord de la tôle perpendiculaire. Préférentiellement, toutes les rangées 46 sont parallèles au même bord.

Chaque rangée 46 peut être définie par son type d'aubes 26. Les aubes 26 d'une même rangée peuvent chacune présenter un même angle d'attaque, et/ou une même hauteur, et/ou une même épaisseur moyenne. Les hauteurs des aubes 26 des différentes rangées peuvent varier, par exemple progressivement d'amont en aval. Eventuellement, dans un compresseur, la hauteur des aubes peut réduire vers l'aval, tandis qu'elles peuvent augmenter vers l'aval dans le cas d'une turbine.

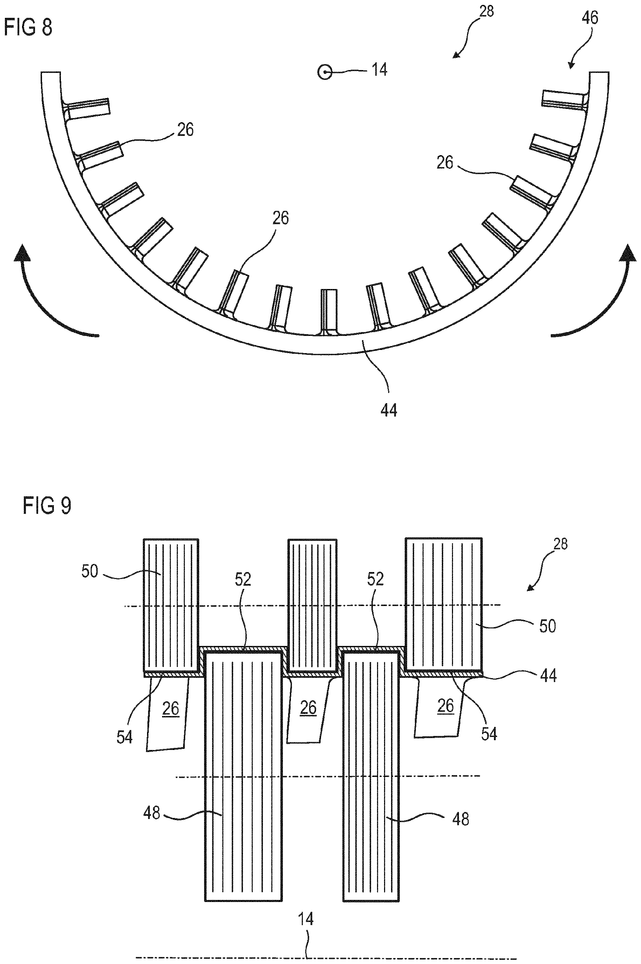

La figure 8 illustre l'étape de cintrage de la tôle 44 initialement plane.

Le tôle 44 est cintrée. Deux de ses côtés opposés sont rapprochés l'un de l'autre en la courbant. Elle peut être partiellement enroulée autour d'un axe selon un rayon de courbure, sur une fraction de tour. Le rayon de courbure peut être constant suivant la circonférence, et peut varier axialement.

Le cintrage peut s'effectuer autour d'un axe de cintrage perpendiculaire à chaque rangée d'aubes. L'axe de cintrage peut être l'axe autour duquel l'aube est enroulée ou tourne. Cet axe de cintrage peut être parallèle à ou peut coïncider avec l'axe de rotation 14 de la turbomachine. Le cintrage peut permettre de réaliser un tube formant une boucle d'un tour, ou une portion angulaire de tube tel un demi-tube. Les aubes 26 qui y sont liées forment au moins une, éventuellement plusieurs demi-rangées annulaires d'aubes, réparties axialement le long de la tôle. Le procédé permet alors de réaliser des demi-carters, séparés par un plan axial. Par plan axial, on entend un plan passant par l'axe de cintrage et/ou l'axe de rotation 14 de la turbomachine. Le carter peut former un demi-tube avec des demi-rangées annulaires d'aubes espacées axialement.

La tôle 44 peut être cintrée de différentes manières. Elle peut être cintrée par enroulement, par poussée, par roulage ou par emboutissage. Elle est alors pliée, tordue, par exemple en la maintenant au niveau de tranches et en l'arquant en appuyant entre les tranches. La tôle 44 peut comprendre des portions de maintien découpées après cintrage.

A l'issue de cette étape, le carter ou la portion de carter peut alors comprendre une portion angulaire de rangée 46 annulaire d'aubes, préférentiellement plusieurs portions angulaires de rangées 46 annulaire d'aubes, une seule étant représentée. La tôle 44 peut présenter un profil axial courbe ou circulaire. Le profil axial est selon un plan perpendiculaire à l'axe de cintrage. La tôle 44 présente une surface interne concave, et une surface externe convexe où sont situées les aubes.

La figure 9 illustre un mode de réalisation du cintrage. Ce mode de réalisation peut être réalisé en complément d'un autre procédé de cintrage, ou permettre de cintrer intégralement la tôle 44.

La tôle 44 peut être cintrée par roulage. La tôle 44 peut être introduite entre des rouleaux (48 ; 50) pour lui donner sa courbure. Ce cintrage peut être progressif. Des rouleaux 48 parallèles peuvent prendre appui contre la tôle 44 entre les rangées d'aubes 26. D'autres rouleaux 50 parallèles aux premiers peuvent prendre appui sur la tôle 44 du côté opposé aux aubes 26. Ces autres rouleaux peuvent s'étendre sur toute la longueur axiale de la tôle, tandis que les premiers rouleaux 48 peuvent chacun s'étendre sur une portion axiale de la tôle.

Alternativement, les rouleaux 50 du côté opposé aux aubes 26 peuvent chacun s'étendre sur une portion axiale de la tôle, mesuré selon l'axe de rotation 14, et/ou une direction perpendiculaire aux rangées d'aubes. La longueur axiale de ces rouleaux 50 peut être configurée de sorte à ce qu'ils puissent s'intercaler 48 entre les rouleaux du côté des aubes. Les rouleaux (48 ; 50) des deux faces peuvent se chevaucher radialement et peuvent être décalés axialement, en fonction de la face où ils sont.

Ainsi, le cintrage peut être configuré de sorte à former des gorges annulaires internes 52, entres les rangées d'aubes ; et éventuellement des gorges annulaires externes 54, au niveau axialement des d'aubes 26. La tôle présente alors un profil de révolution en créneaux. L'épaisseur de la tôle 44 peut être inférieure à la profondeur radiale des gorges, et peut être inférieure à l'épaisseur de la paroi du carter.

Le roulage peut réduire la longueur axiale de la tôle 44, éventuellement les rangées d'aubes peuvent se rapprocher axialement. Le cintrage peut comprendre une étape de galetage, éventuellement pour améliorer l'état de surface de la tôle, et/ou comprimer la matière pour limiter l'apparition, la propagation de fissures.

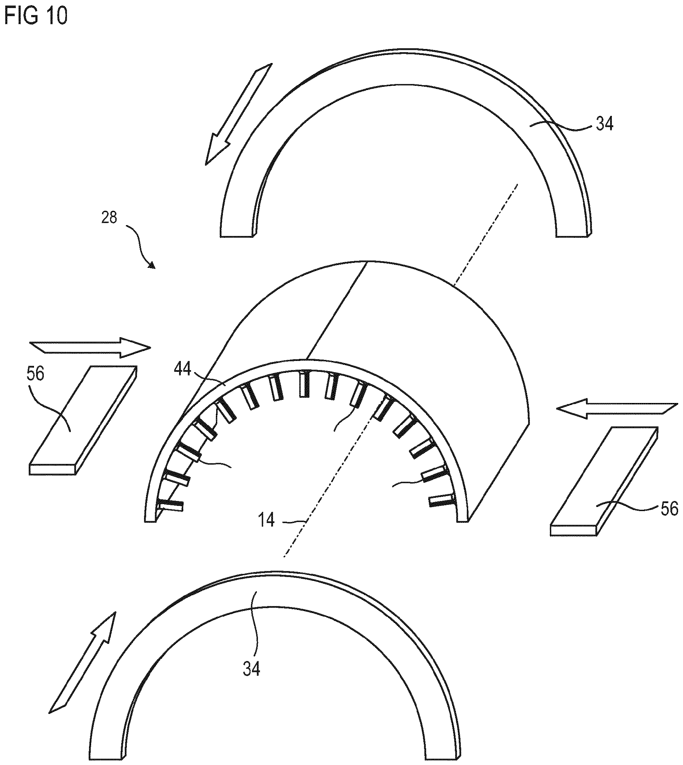

La figure 10 illustre l'étape de soudage des brides sur la tôle.

Le carter peut comprendre des brides axiales 56 qui s'étendent radialement. Les brides axiales 56 peuvent s'étendre sur toute la longueur axiale de la tôle 44 et permettre un assemblage, éventuellement de deux demi-carters. Les brides annulaires 34 peuvent parcourir toute la courbe de la tôle associée. Les brides (34 ; 56) peuvent former des renforts rigidifiant le carter face à la flexion et/ou à l'ovalisation.

Les brides (34 ; 56) peuvent être fixées sur la tôle cintrée, par exemple par soudage. Les brides peuvent être soudées sur une face extérieure convexe ou sur une tranche de la tôle 44. Les brides peuvent être des bandes de matière, droites ou courbes. Elles peuvent comprendre des orifices de fixation (non représentés). Les brides (34 ; 56) d'une même portion de carter peuvent toutes être soudées les unes aux autres afin de former un cadre de renfort.

Le procédé peut ensuite comprendre une étape de dépôt ou application d'une couche de matériau abradable. Cette couche peut être une couche annulaire et peut être disposée entre les rangées annulaires d'aubes (une seule rangée est représentée), à l'intérieur. La couche peut comprendre un élastomère, un silicone. Elle est adaptée pour travailler par abrasion avec le rotor. Elle peut s'effriter au contact d'aubes rotoriques.

## Revendications

1. Procédé de fabrication d'un carter (28) de turbomachine (2) axiale, notamment de compresseur (4 ; 6), le carter (28) comprenant une tôle (44) et au moins une rangée (46) annulaire d'aubes statoriques (26), le procédé comprenant les étapes suivantes :
(a) fourniture ou fabrication (104) d'une tôle (44) métallique plane,
(b) soudage (106) d'aubes statoriques sur l'une des faces planes de la tôle (44), les aubes étant agencées de sorte à former au moins une rangée (46) d'aubes, et ensuite une étape de
(c) cintrage (108) de la tôle autour d'un axe de cintrage perpendiculaire à la rangée (46) d'aubes (26), de sorte à former un carter (28) avec au moins une portion angulaire de tube grâce à la tôle, et avec au moins une portion angulaire de rangée annulaire d'aubes (26).

2. Procédé selon la revendication 1, **caractérisé en ce que** lors de l'étape (b) soudage (106) des aubes, les aubes (26) sont soudées par friction, éventuellement selon un mouvement dans le plan de la tôle (44) plane.

3. Procédé selon l'une des revendications 1 à 2, **caractérisé en ce qu'**à l'issue de l'étape (c) cintrage (108) de la tôle, la tôle (44) forme un tube avec au moins une rangée annulaire d'aubes, ou la tôle forme une fraction angulaire de tube tel un demi-tube avec au moins une demi-rangée annulaire d'aubes, éventuellement la tôle (44) cintrée présente une surface concave et une surface convexe, chaque rangée d'aubes (26) étant située sur la surface concave.

4. Procédé selon l'une des revendications 1 à 3, **caractérisé en ce que** lors de l'étape (b) soudage (106) des aubes, au moins une ou chaque aube (26) est soudée sur tout son profil aérodynamique à sa jonction avec la tôle (44).

5. Procédé selon l'une des revendications 1 à 4, **caractérisé en ce que** lors de l'étape (b) soudage (106) des aubes, les aubes (26) de chaque rangée (46) présentent des cordes parallèles, les cordes des aubes étant inclinées d'un angle inférieur à 30° préférentiellement inférieur à 20°, par rapport à l'axe de cintrage de la tôle de l'étape (c) cintrage (108) de la tôle.

6. Procédé selon l'une des revendications 1 à 5, **caractérisé en ce que** l'étape (a) fourniture ou fabrication (104) d'une tôle comprend une étape d'usinage (105) d'une plaque brute (38) de sorte à former une tôle (44) avec des variations d'épaisseurs.

7. Procédé selon la revendication 6, **caractérisé en ce que** l'étape d'usinage (105) comprend la réalisation de moignons (42) d'aubes sur lesquels sont soudées les aubes (26), l'épaisseur générale E1 de la tôle (26) étant inférieure ou égale à la hauteur des moignons (42), l'épaisseur de chaque moignon étant supérieure à l'épaisseur de l'aube correspondante.

8. Procédé selon l'une des revendications 1 à 7, **caractérisé en ce que** le carter (28) est formé de deux demi-carters séparés axialement suivant un plan de séparation axial.

9. Procédé selon l'une des revendications 1 à 8, **caractérisé en ce qu'**il comprend en outre une étape de (d) soudage (110) de brides annulaires s'étendant radialement et/ou de brides axiales s'étendant radialement, éventuellement les brides axiales sont réalisées par pliage.

10. Procédé selon l'une des revendications 1 à 9, **caractérisé en ce que** lors de l'étape (c) cintrage (108), le cintrage peut comprendre au moins une, préférentiellement plusieurs étapes de roulage (109) et/ou de galetage.

11. Procédé selon la revendication 10, **caractérisé en ce que** le cintrage est effectué avec des rouleaux (48) prenant appui sur la tôle du côté des aubes de part et d'autre de chaque rangée (46) annulaire d'aubes, préférentiellement la tôle (44) comprend plusieurs rangées d'aubes et les rouleaux (48) du côté des aubes prennent appui entre chaque rangée d'aubes.

12. Procédé selon l'une des revendications 10 à 11, **caractérisé en ce que** le cintrage est effectué à l'aide de rouleaux (48 ; 50) disposés de part et d'autre de la tôle (44), les rouleaux (48 ; 50) situés d'un côté de la tôle (44) étant à distance axialement par rapport aux rouleaux (48 ; 50) situés de l'autre côté de la tôle, éventuellement les rouleaux situés d'un côté de la tôle chevauchent radialement les rouleaux situés de l'autre côté de la tôle de sorte à former des gorges annulaires (52) intérieures entre les rangées annulaires d'aubes.

13. Procédé selon la revendication 12, **caractérisé en ce qu'**au moins une gorge annulaire (52) présente une profondeur supérieure à l'épaisseur générale E1 de la tôle.

14. Procédé selon l'une des revendications 1 à 13, **caractérisé en ce qu'**il comprend en outre une étape (e) application d'au moins une couche annulaire de matériau abradable (32), éventuellement dans une gorge annulaire interne (52).

15. Turbomachine axiale (2) comprenant un carter (28) avec au moins une rangée (46) annulaire d'aubes statoriques (26), **caractérisée en ce que** le carter (28) est réalisé suivant le procédé de réalisation d'un carter (28) selon l'une des revendications 1 à 14.

## Patentansprüche

1. Verfahren zur Herstellung eines Gehäuses (28) für eine axiale Turbomaschine (2), insbesondere für einen Kompressor (4; 6), wobei das Gehäuse (28) aus einem Blech (44) und mindestens einer ringförmigen Anordnung (46) von Statorschaufeln (26) besteht, wobei das Verfahren die folgenden Schritte umfasst:
(a) Bereitstellung oder Herstellung (104) eines ebenen Blechs (44),
(b) Schweißen (106) von Statorschaufeln auf eine der ebenen Flächen des Blechs (44), wobei die Schaufeln so angeordnet sind, dass sie mindestens eine Anordnung (46) von Schaufeln bilden,
und dann der Schritt des:
(c) Biegens (108) des Blechs um eine zur Anordnung (46) der Schaufeln (26) senkrechte Biegeachse, um durch das Blech ein Gehäuse (28) mit mindestens einem winkelförmigen Rohrabschnitt und mit mindestens einem winkelförmigen Abschnitt einer ringförmigen Anordnung von Schaufeln (26) zu bilden.

2. Verfahren nach Anspruch 1, **dadurch gekennzeichnet, dass** während des Schrittes (b) Schweißen (106) der Schaufeln, die Schaufeln (26) mittels Reibung, optional aufgrund einer Bewegung in der Ebene des ebenen Bleches (44), verschweißt werden.

3. Verfahren nach entweder Anspruch 1 oder Anspruch 2, **dadurch gekennzeichnet, dass** das Blech (44) nach dem Schritt (c) Biegen (108) ein Rohr mit mindestens einer ringförmigen Anordnung von Schaufeln bildet, oder das Blech einen winkelförmigen Rohrabschnitt, wie z. B. ein Halbrohr mit mindestens einer ringförmigen halben Anordnung von Schaufeln, bildet, wobei das gebogene Blech (44) gegebenenfalls eine konkave Oberfläche und eine konvexe Oberfläche aufweist, wobei jede Anordnung von Schaufeln (26) auf der konkaven Oberfläche angeordnet ist.

4. Verfahren nach einem der Ansprüche 1 bis 3, **dadurch gekennzeichnet, dass** während des Schrittes (b) Schweißen (106) der Schaufeln mindestens eine oder jede Schaufel (26) über ihr gesamtes aerodynamisches Profil an der Verbindungsstelle mit dem Blech (44) verschweißt wird.

5. Verfahren nach einem der Ansprüche 1 bis 4, **dadurch gekennzeichnet, dass** die Schaufeln (26) während des Schrittes (b) Verschweißen (106) der Schaufeln jeder Anordnung (46) parallele Sehnenlinien aufweisen, wobei die Sehnenlinien der Schaufeln um einen Winkel von weniger als 30°, vorzugsweise weniger als 20°, relativ zur Biegeachse des Bleches des Schrittes (c) Biegen (108) des Blechs geneigt sind.

6. Verfahren nach einem der Ansprüche 1 bis 5, **dadurch gekennzeichnet, dass** der Schritt (a) Bereitstellen oder Herstellen (104) eines Metallblechs einen Schritt der Bearbeitung (105) einer Rohplatte (38) umfasst, um ein Metallblech (44) mit Dickenvariationen zu formen.

7. Verfahren nach Anspruch 6, **dadurch gekennzeichnet, dass** der Bearbeitungsschritt (105) die Herstellung von Stümpfen (42) für Schaufeln umfasst, an die die Schaufeln (26) angeschweißt werden, wobei die allgemeine Dicke E1 des Blechs (26) kleiner oder gleich der Höhe der Stümpfe (42) ist und wobei die Dicke jedes Stumpfes größer als die Dicke der entsprechenden Schaufel ist.

8. Verfahren nach einem der Ansprüche 1 bis 7, **dadurch gekennzeichnet, dass** das Gehäuse (28) aus zwei Gehäusehälften gebildet wird, die axial entlang einer axialen Trennebene getrennt sind.

9. Verfahren nach einem der Ansprüche 1 bis 8, **dadurch gekennzeichnet, dass** es ferner einen Schritt (d) des Schweißens (110) von sich radial erstreckenden Ringflanschen und/oder sich radial erstreckenden Axialflanschen umfasst, wobei die Axialflansche optional durch Knicken hergestellt werden.

10. Verfahren nach einem der Ansprüche 1 bis 9, **dadurch gekennzeichnet, dass** während des Schrittes (c) Biegen (108) das Biegen mindestens einen, vorzugsweise mehrere Schritte des Walzens (109) und/oder Glattwalzens umfassen kann.

11. Verfahren nach Anspruch 10, **dadurch gekennzeichnet, dass** das Biegen mit Walzen (48) durchgeführt wird, die an das Blech an der Seite der Schaufeln an der einen und der anderen Seite jeder ringförmigen Anordnung (46) von Schaufeln angrenzen, wobei vorzugsweise das Blech (44) mehrere Anordnungen von Schaufeln umfasst und die Rollen (48) an der Seite der Schaufeln zwischen jeder Anordnung von Schaufeln angrenzen.

12. Verfahren nach entweder Anspruch 10 oder Anspruch 11, **dadurch gekennzeichnet, dass** das Biegen unter Verwendung von Walzen (48; 50) durchgeführt wird, die auf der einen und der anderen Seite des Blechs (44) angeordnet sind, wobei die Walzen (48; 50), die sich auf einer Seite des Blechs (44) befinden, axial in Bezug auf die Walzen (48; 50) beabstandet sind, die auf der anderen Seite des Blechs angeordnet sind, wobei die auf der einen Seite des Blechs angeordneten Walzen optional die auf der anderen Seite des Blechs angeordneten Rollen radial überlappen, so dass innere ringförmige Nuten (52) zwischen den ringförmigen Anordnungen von Schaufeln gebildet werden.

13. Verfahren nach Anspruch 12, **dadurch gekennzeichnet, dass** mindestens eine ringförmige Nut (52) eine Tiefe aufweist, die größer ist als die allgemeine Dicke E1 des Blechs.

14. Verfahren nach einem der Ansprüche 1 bis 13, **dadurch gekennzeichnet, dass** es ferner einen Schritt (e) des Aufbringens mindestens einer ringförmigen Schicht aus abriebfähigen Material (32), optional in einer inneren ringförmigen Nut (52), umfasst.

15. Axiale Turbomaschine (2) mit einem Gehäuse (28), das mindestens eine ringförmige Anordnung (46) von Statorschaufeln (26) aufweist, **dadurch gekennzeichnet, dass** das Gehäuse (28) nach dem Herstellungsverfahren eines Gehäuses (28) nach einem der Ansprüche 1 bis 14 hergestellt ist.

## Claims

1. Method for producing a housing (28) for an axial turbomachine (2), in particular for a compressor (4; 6), the housing (28) comprising a metal sheet (44) and at least one annular row (46) of stator blades (26), the method comprising the following steps:
(a) providing or producing (104) a planar metal sheet (44),
(b) welding (106) stator blades onto one of the planar faces of the metal sheet (44), the blades being arranged so as to form at least one row (46) of blades,
and then a step of:
(c) bending (108) the metal sheet about a bending axis perpendicular to the row (46) of blades (26), so as to form a housing (28) with at least one angular tube portion as a result of the metal sheet, and with at least one angular portion of an annular row of blades (26).

2. Method according to claim 1, **characterised in that**, during step (b) welding (106) the blades, the blades (26) are welded by means of friction, optionally in accordance with a movement in the plane of the planar metal sheet (44).

3. Method according to either claim 1 or claim 2, **characterised in that**, following step (c) bending (108) the metal sheet, the metal sheet (44) forms a tube with at least one annular row of blades, or the metal sheet forms an angular tube portion, such as a half-tube with at least one annular half-row of blades, optionally the bent metal sheet (44) has a concave surface and a convex surface, each row of blades (26) being located on the concave surface.

4. Method according to any one of claims 1 to 3, **characterised in that**, during step (b) welding (106) the blades, at least one or each blade (26) is welded over the entire aerodynamic profile thereof at the junction thereof with the metal sheet (44).

5. Method according to any one of claims 1 to 4, **characterised in that**, during step (b) welding (106) the blades, the blades (26) of each row (46) have parallel chord lines, the chord lines of the blades being inclined of an angle of less than 30°, preferably of less than 20°, relative to the bending axis of the metal sheet of step (c) bending (108) the metal sheet.

6. Method according to any one of claims 1 to 5, **characterised in that** step (a) providing or producing (104) a metal sheet comprises a step of machining (105) a raw plate (38) so as to form a metal sheet (44) with variations of thickness.

7. Method according to claim 6, **characterised in that** the machining step (105) comprises the production of stumps (42) of blades to which the blades (26) are welded, the general thickness E1 of the metal sheet (26) being less than or equal to the height of the stumps (42), the thickness of each stump being greater than the thickness of the corresponding blade.

8. Method according to any one of claims 1 to 7, **characterised in that** the housing (28) is formed from two half-housings which are separated axially along an axial separation plane.

9. Method according to any one of claims 1 to 8, **characterised in that** it further comprises a step (d) of welding (110) annular flanges which extend radially and/or axial flanges which extend radially, optionally the axial flanges are produced by means of folding.

10. Method according to any one of claims 1 to 9, **characterised in that** during step (c) bending (108), the bending may comprise at least one, preferably a plurality of, step(s) of rolling (109) and/or roller burnishing.

11. Method according to claim 10, **characterised in that** the bending is carried out with rollers (48) which abut the metal sheet at the side of the blades, at one side and the other of each annular row (46) of blades, preferably the metal sheet (44) comprises a plurality of rows of blades and the rollers (48) at the side of the blades are in abutment between each row of blades.

12. Method according to either claim 10 or claim 11, **characterised in that** the bending is carried out using rollers (48; 50) which are arranged at one side and the other of the metal sheet (44), the rollers (48; 50) which are located at one side of the metal sheet (44) being axially spaced apart relative to the rollers (48; 50) which are located at the other side of the metal sheet, optionally the rollers which are located at one side of the metal sheet radially overlap the rollers which are located at the other side of the metal sheet so as to form internal annular grooves (52) between the annular rows of blades.

13. Method according to claim 12, **characterised in that** at least one annular groove (52) has a depth which is greater than the general thickness E1 of the metal sheet.

14. Method according to any one of claims 1 to 13, **characterised in that** it further comprises a step (e) of application of at least one annular layer of abradable material (32), optionally in an internal annular groove (52).

15. Axial turbomachine (2) comprising a housing (28) having at least one annular row (46) of stator blades (26), **characterised in that** the housing (28) is produced in accordance with the production method of a housing (28) according to any one of claims 1 to 14.
